# EUROPÄISCHE PATENTSCHRIFT

(11) **EP 0 860 491 B1**
(45) Veröffentlichungstag und Bekanntmachung des Hinweises auf die Patenterteilung: **05.09.2007**
(21) Anmeldenummer: 98103167.7
(22) Anmeldetag: 24.02.1998
(51) Int. Cl.: C09K 3/32, B01J 20/26, B09C 1/02

(54) **Adsorptionsmittel und Verfahren zur Reinigung von ölverschmutzten Böden**
Adsorption agent and process for cleaning oil contaminated soils
Agent adsorbant et procédé pour purifier des sols contaminés par des hydrocarbures

(30) Priorität: 25.02.1997 DE 19707251
(43) Veröffentlichungstag der Anmeldung: 26.08.1998
(73) Patentinhaber: Degler, Alois A., 76437 Rastatt (DE)
(72) Erfinder: Budny, Lucyna, 41460 Neuss (DE)
(74) Vertreter: Merckling, Norbert

(56) Entgegenhaltungen:
- EP-A- 0 518 336
- WO-A-94/21392
- DE-A- 2 229 361
- FR-A- 2 460 987
- GB-A- 1 102 898
- US-A- 3 929 631
- US-A- 5 066 405

## Beschreibung

Die vorliegende Erfindung betrifft ein Adsorptionsmittel sowie ein Verfahren zur Reinigung von Böden oder anderen körnigen Feststoffen, wie z. B. Sand, Kies und dergleichen, die mit Kohlenwasserstoffen, insbesondere aliphatischen Kohlenwasserstoffen, verseucht sind.

Die Verschmutzung von Böden, wie z. B. Meeresstränden mit Kohlenwasserstoffen nimmt immer mehr zu. Der Grund hierfür sind Unfälle mit Tankschiffen, die sich aufgrund des zunehmenden Transportvolumens häufen. Auch wird gelegentlich von Schiffen Altöl unkontrolliert in die offene See abgelassen, das dann irgendwann auf einen Strand zutreibt und diesen verseucht. Ein anderes Problem, das nicht im Zusammenhang mit der Schiffahrt steht, sind Beschädigungen von Pipelines, bei denen immer wieder grosse Mengen an Erdöl austreten. Auch hierbei werden erhebliche Flächen und Volumina des umgebenden Bodens verseucht und damit unbrauchbar gemacht. Ein letztes Beispiel für die Notwendigkeit, kohlenwasserstoffverseuchte Feststoffe zu reinigen, sind die Verseuchungen, die von nicht zeitgemässen lndustriebetrieben hinterlassen werden.Hier kann sowohl der Boden unter dem Industriegelände mit Schadstoffen beladen sein als auch der beim Abriss von Gebäuden entstehende Schutt.

Die Verschmutzungen der obengenannten Art wurden bislang im wesentlichen auf zwei Arten behandelt. Bei unzugänglichen oder abgelegenen Meeresstränden hat man die Verschmutzung hingenommen und darauf gehofft, dass die Wellenbewegung sowie die Sonneneinstrahlung die Verschmutzung im Laufe der Zeit beseitigen. Die Zeiträume hierfür liegen je nach Umgebungstemperatur in der Grössenordnung von 30 Jahren. Die andere Möglichkeit ist, die verseuchten Böden abzutragen, abzutransportieren und entweder zu deponieren oder zu verbrennen. Beide Möglichkeiten haben offensichtliche Nachteile. Beim ersten Verfahren ist die Verschmutzung über einen langen Zeitraum vorhanden und das Gebiet weder für Pflanzen und Tiere noch für den Menschen nutzbar. Bei der zweiten Methode fallen grosse, zu transportierende Feststoffmassen an, die ausserdem bei ihrer Beseitigung ein nicht unbeachtliches Umweltrisiko darstellen.

Es ist bekannt, wie aus Dokument US-A-3 929 631 hervorgeht, ein Adsorbtionsmittel zu benutzen, daß mit Propan aufgeschaümte palletisierte Mischpolymere aus Styrol und Butadien enthält. Dieses Adsorbtionsmittel wird für Reinigung von ölbeschmutzten Boden oder Wasseroberfläche benutzt.

Es ist daher Aufgabe der Erfindung, ein Verfahren sowie ein neuartiges Adsorptionsmittel zur Reinigung von kohlenwasserstoffverschmutzten Böden zu schaffen, die auch für den Einsatz in der Nähe des verschmutzten Gebiets geeignet sind und bei denen nach erfolgter Reinigung ein geringeres Abfallvolumen zurückbleibt.

Diese Aufgabe wird von einem Adsorptionsmittel mit den Merkmalen der Ansprüche 1 bis 4 sowie von einem Verfahren mit den Merkmalen der Ansprüche 5 bis 8 gelöst.

Weil das Adsorptionsmittel mit schaumartiger Struktur auf der Basis von aufgeschäumtem Mischpolymer von Styrol mit Olefinen mit 1 bis 8 Kohlenstoffatomen gefertigt ist, ist die Adsorptionsfähigkeit für flüssige, pastöse oder wachsartige Kohlenwasserstoffe, wie sie in Verschmutzungen auftreten, besonders gut. Als Mischpolymer mit Olefinen eignen sich in besonders guter Weise das Mischpolymer von Styrol mit Ethylen und das Mischpolymer von Styrol mit Propylen sowie die Mischpolymere von Styrol mit Butylen oder Isobutylen. Dabei ist für eine günstige Relation von Oberfläche zu Volumen vorteilhaft, wenn das aufgeschäumte Mischpolymer zerrieben oder zerrissen wird, um eine Flockengrösse von etwa 1 mm bis 8 mm Durchmesser zu erreichen. Nach der mechanischen Einstellung der Korn- oder Flockengrösse wird das Adsorptionsmittel vorteilhaft mit einer Lösung von Diolen oder Triolen behandelt, die gute oberflächenphysikalische Eigenschaften hervorrufen.

Weil bei dem neuen Verfahren die Schritte
- Zusammenführung des Bodens oder des Feststoffs mit einem Adsorptionsmittel zu einem Gemisch;
- intensives Durchmischen und Kontaktieren des Gemisches;
- Trennen des Gemisches in eine vorwiegend das mit der Verschmutzung beladene Adsorptionsmittel enthaltende Phase und eine den gereinigten Boden oder Feststoff enthaltende Phase;
- Reinigung des beladenen Adsorptionsmittels von der Verschmutzung enthält, kann das Verfahren unmittelbar am Ort der Verschmutzung sowie in einem benachbarten Gebiet durchgeführt werden. Hierdurch entfallen lange Transportwege, und der von der Verschmutzung weitestgehend befreite Boden kann an seinen ursprünglichen Ort zurückgebracht werden. Es ist mit diesem Verfahren möglich, den verschmutzten Boden oder sonstigen Feststoff in einem nahezu kontinuierlichen Verfahren abzutragen und in den Reinigungsprozess einzuführen, wo er mit dem Adsorptionsmittel vermischt wird, nach intensiver Vermischung die zu entfernenden Kohlenwasserstoffe sich an dem Adsorptionsmittel anlagern und nicht zuletzt aufgrund des grossen Dichteunterschiedes zwischen dem Boden und dem Adsorptionsmittel von diesem getrennt werden. Das Adsorptionsmittel kann von der Verschmutzung befreit werden und über eine gewisse Anzahl von Zyklen wiederverwendet werden.

Die Trennung des Gemisches in gereinigten Boden und schadstoffbeladenes Adsorptionsmittel wird gefördert, wenn vor dem Trennen des Gemisches dem Gemisch eine Flüssigkeit, insbesondere Wasser, zugegeben wird. Hierfür ist bei der Reinigung von Stränden beispielsweise Meerwasser geeignet. Zur Minimierung des Einsatzes an Adsorptionsmittel und des verbleibenden Abfallvolumens ist es vorteilhaft, wenn das Adsorptionsmittel nach der Reinigung in einem Kreisprozess mit dem zu reinigenden Boden oder Feststoff wieder zusammengeführt wird. Dabei kann die Reinigung des Adsorptionsmittels in einer Presse oder Zentrifuge erfolgen, in der die Kohlenwasserstoffe aus dem Adsorptionsmittel herausgepresst werden.Ein vorteilhafter Nebeneffekt hierbei ist, dass die zu entfernenden Kohlenwasserstoffe danach in flüssiger oder pastöser Form vorliegen und möglicherweise nach einer Reinigung wiederverwendet werden können.

Es ist insbesondere vorteilhaft, wenn die Reinigung in wenigstens zwei Schritten erfolgt, wobei zunächst das Adsorptionsmittel zusammen mit der Verschmutzung von der Flüssigkeit (Meerwasser oder dergleichen) getrennt wird und dann die Verschmutzung von dem Adsorptionsmittel abgetrennt wird.

Weiterhin ist vorteilhaft, wenn das Durchmischen und Kontaktieren in einem geeigneten, möglichen Weise modifizierten Schneckenförderer erfolgt. Das Auftrennen des Gemisches nach seinem Dichteunterschied erfolgt vorteilhaft in einem Sieb- oder Flotationsvorgang, bei dem der Boden aufgrund seiner grossen Dichte in Richtung der Schwerkraft nach unten absinkt, während das Adsorptionsmittel nach oben aufschwimmt. Wenn der zu reinigende Boden erst längere Zeit nach dem Eintreten der Verschmutzung behandelt wird, sind die flüchtigen Bestandteile der Kohlenwasserstoffe bereits ausgetreten und die Kohlenwasserstoffe sind möglicherweise soweit verfestigt, dass sie mit dem vorliegenden Verfahren nicht mehr quantitativ entfernt werden können. In diesem Fall ist es vorteilhaft, wenn vor oder während des Mischens von Boden und Adsorptionsmittel ein Lösungsmittel, vorzugsweise ein unpolares Lösungsmittel wie Benzin oder Naphtha, zugegeben wird. Die zugegebenen Lösungsmittel können zusammen mit der Verschmutzung zunächst aus dem zu reinigenden Boden oder Feststoff entfernt werden und dann auch von dem Adsorptionsmittel abgetrennt werden. Dieser Anwendungsfall liegt beispielsweise bei Ölbohrfeldern in Wüstengebieten vor, in denen die intensive Sonneneinstrahlung und die hohe Temperatur schnell zu einer Verfestigung des ausgetretenen Erdöls führen.

Schliesslich ist für das Verfahren insgesamt von Vorteil, wenn der Boden oder der Feststoff vor oder während des Verfahrens gesiebt wird, um ungeeignete Bestandteile zu entfernen und einer separaten Reinigung zuführen zu können.

Eine für das erfindungsgemässe Verfahren geeignete Vorrichtung umfasst einen Vorlauf mit Mitteln zum Zusammenführen der beiden Medien (zu reinigender Boden oder Feststoff und Adsorptionsmittel), eine Mischervorrichtung zum intensiven Kontaktieren der beiden Medien, einer Sieb- oder Flotationsvorrichtung zur Auftrennung der beiden durch ihre Dichte unterscheidbaren Phasen sowie eine Trennvorrichtung zur Abtrennung des entfernten Kohlenwasserstoffs von dem Adsorptionsmittel.

Dabei ist vorteilhaft, wenn dem Vorlauf eine Siebeinrichtung zum Klassifizieren des zu reinigenden Bodens oder Feststoffs zugeordnet ist. Die Mischervorrichtung ist vorteilhaft ein Schneckenförderer mit zwei gegenläufigen Förderschnecken, die möglicherweise so modifiziert sind, dass sie die Durchmischung und Kontaktierung der verschiedenen Stoffe fördern. Nach der Durchmischung und Kontaktierung ist es vorteilhaft, wenn eine Sprühvorrichtung zur Zumischung von Wasser zu dem Gemisch vorgesehen ist, wobei Wasser oder eine sonstige geeignete Flüssigkeit die Auftrennung der verschiedenen Stoffe in der Flotationsvorrichtung verbessern. Es ist weiterhin vorteilhaft, wenn die Trennvorrichtung eine zweistufige Zentrifuge ist. Dabei ist in der ersten Stufe bei geringer Fliehkraft zunächst das aus dem Sieb- oder Flotationsvorgang herübergetragene Wasser von dem Adsorptionsmittel zu entfernen. In der zweiten Stufe ist dann der Kohlenwasserstoff von dem Adsorptionsmittel zu entfernen, der aufgrund seiner physikalischen Eigenschaften besser an dem Adsorptionsmittel haftet als das Wasser. Schliesslich ist vorteilhaft eine Fördereinrichtung vorgesehen, die das Adsorptionsmittel in einem Kreisprozess von der Zentrifuge zu dem Vorlauf fördert.

Im folgenden wird die vorliegenden Erfindung anhand von Ausführungsbeispielen beschrieben.

Eine transportable oder stationäre Vorrichtung zur Durchführung des erfindungsgemässen Verfahrens ist dargestellt.

Dabei ist ein Vorlagebehälter für das zu reinigende Medium, Sand, Boden oder sonstige schüttfähige Festkörper, an seinem Einlass mit einem Sieb zur Abtrennung von ungeeigneten Bestandteilen versehen. Ein zweiter Vorlagebehälter ist für das Adsorptionsmittel bereitgestellt. Die beiden Vorlagebehälter sind über eine y-förmige Rohrleitung mit dem Eingangsabschnitt eines Doppelmischers oder eines anderen geeigneten Mischers verbunden. Der Doppelmischer weist zwei gegenläufige Förder- und Mischschnecken auf, die die zu mischenden Substanzen zu einem Ausgangsstutzen fördern. Durch den Stutzen wird das Gemisch in einen Flotationsbehälter gefördert, wo es zunächst auf ein plattenförmiges Sieb verbracht wird. Eine Sprüheinrichtung ist vorgesehen, um das Gemisch auf dem Sieb zu befeuchten.Der Flotationsbehälter weist einen oberen Ablauf und einen unteren Ablauf auf. Der untere Ablauf ist mit einem Schieber verschliessbar. Der obere Ablauf mündet in eine Zentrifuge, die ebenfalls mit einem Ablauf und einem Schieber versehen ist. Eine Rückleitung ist nur schematisch dargestellt und führt von der Zentrifuge von dem Vorlagebehälter. Mit dieser Rückleitung wird das Adsorptionsmittel von der Zentrifuge in den Vorlagebehälter überführt.

In der Praxis wird das erfindungsgemässe Verfahren unter Anwendung einer Vorrichtung bei der Reinigung eines Meeresstrandes infolge Ölverschmutzung durch einen Tankerunfall in Grundzügen etwa folgendermassen ablaufen:

Der Sand wird abgebaut und zu der entweder unmittelbar am Strand oder im Hinterland befindlichen Anlage gefördert. Dort wird er in den Vorlagebehälter gefördert, wobei er zunächst das Sieb passieren muss. Hier werden grössere Bestandteile, wie z. B. Steine, Holz und dergleichen, abgetrennt und einer separaten Reinigung zugeführt. Das Sieb weist vorteilhaft eine Maschenweite von etwa 40 mm auf und ist in einem Winkel von rund 10° schräg eingebaut. Hierdurch können die grösseren Bestandteile zu einer seitlichen Entnahmestation rollen. Der durch das Sieb passierende Sand wird kontinuierlich und dosiert in das y-förmige Rohr gegeben und dort im Bereich der Verzweigung in einem je nach Anwendungsfall zu bestimmenden Verhältnis mit dem Adsorptionsmittel aus dem Vorlagebehälter zusammengeführt.Die beiden Substanzen, die noch nicht innig vermischt sind, gehen dann in den Doppelmischer, wo sie durch die beiden Förderschnecken einerseits durchmischt und innig kontaktiert werden, andererseits zu dem Auslass gefördert werden. Die Adsorption der Kohlenwasserstoffe von dem schadstoffbeladenen Sand auf das Adsorptionsmittel erfolgt im wesentlichen innerhalb des Doppelmischers auf dessen Förderweg. Das kontaktierte Gemisch, das nun Sand und schadstoffbeladenes Adsorptionsmittel enthält, wird auf das Sieb des Flotationsbehälters gegeben und dort mit Meerwasser aus der Sprühvorrichtung berieselt. Dabei fallen der Sand und das Adsorptionsmittel teilweise durch die Öffnungen des Siebes, die in der Grössenordnung von etwa 2 mm liegen, zum anderen Teil werden der Sand und das Adsorptionsmittel über die in einem Winkel von rund 5° - 7° schräg stehende Siebfläche geschwemmt und fallen an einem randseitigen Schlitz herab in den Flotationsbehälter. Dort ist der durch das Meerwasser aus den Sprühvorrichtungen aufrechterhaltene Wasserpegel im Bereich der Unterkante des Ablaufstutzens. Das Adsorptionsmittel sowie alle leichteren Bestandteile als Wasser schwimmen auf der Oberfläche auf und werden zusammen mit einem geringen Anteil Wasser durch den Ablaufstutzen in die Zentrifuge geleitet. Die Bestandteile, die schwerer als Wasser sind, sinken in dem Flotationsbehälter nach unten und sammeln sich vor dem Schieber. Dort können sie abgezogen werden, sobald eine ausreichende Menge vorhanden ist.

Das in die Zentrifuge abgeleitete Adsorptionsmittel wird zusammen mit dem Wasser zunächst zentrifugiert, wobei das leichter abtrennbare Wasser entfernt wird, in einer zweiten Stufe mit höherer Fliehkraft (d. h. grösserer Drehzahl oder grösserem Radius) wird dann das stärker anhaftende Kohlenwasserstoffgemisch von dem Adsorptionsmittel getrennt. Das Adsorptionsmittel wird über die Leitung zurück in den Vorlagebehälter geführt, während die Kohlenwasserstoffe abgeführt werden und entweder nach der Abtrennung des Adsorptionsmittels wiederverwertet oder verbrannt werden.

Der über den Schieber 13 abgezogene Sand kann unmittelbar an den Strand zurückgebracht werden, so dass hier im wesentlichen keine Abtragung des Sandes erfolgt. Es ist lediglich dafür Sorge zu tragen, dass der gereinigte Sand möglichst nicht mit noch verschmutztem Sand in Berührung kommt.

Ein Ausführungsbeispiel eines erfindungsgemässen Adsorptionsmittels ist gefertigt als Mischpolymer von Styrol mit Ethylen. Das Mischpolymer ist mit einem Gas aufgeschäumt, das keine halogenierten Kohlenwasserstoffe enthält. Nach dem Aufschäumen und Verfestigen wird das Adsorptionsmittel mechanisch zerrissen, so dass offenporige Flocken mit einer Flockengrösse von 1 mm bis 8 mm entstehen.

Dieses Adsorptionsmittel ist mechanisch bei dem vorgesehenen Verfahren relativ gut belastbar und aufgrund seiner unpolaren Molekülstruktur für die Adsorption von fluiden Kohlenwasserstoffen gut geeignet. Es eignet sich insbesondere für die Adsorption derjenigen Kohlenwasserstoffe, die in Erdöl oder Erdölprodukten vorwiegend vorhanden sind.

Dennoch zeigen Vergleichsversuche mit diesem Adsorptionsmittel, dass sich auch über längere Zeit in handelsüblichem Benzin keine Lösung oder Quellung des Adsorptionsmittels einstellt, wohingegen sich bei dem im Vergleichsversuch ebenfalls geprüften Polystyrolschaum innerhalb kürzester Zeit nach dem Kontakt mit Benzin Lösungserscheinungen einstellen.

Das derart gefertigte Adsorptionsmittel findet bei dem erfindungsgemässen Verfahren Verwendung. Hierbei sind zunächst die mechanische Beständigkeit und das gute Adsorptionsvermögen beim Durchmischen mit dem zu reinigenden Feststoff vorteilhaft. Die Flotation wird gefördert, weil das Adsorptionsmittel eine vorteilhaft geringe Dichte aufweist. Schliesslich kann aus dem schwammartigen Adsorptionsmittel 1 das adsorbierte Kohlenwasserstoffgemisch durch Zentrifugieren oder auch durch Pressen abgetrennt werden. Das Adsorptionsmittel ist dadurch mehrfach verwendbar. Nach einigen Anwendungszyklen ist jedoch die Adsorptionsfähigkeit durch Verschmutzung mit nicht abtrennbaren Stoffen oder durch mechanische Beeinträchtigungen erschöpft, so dass auch das Adsorptionsmittel entsorgt werden muss. Hierbei kommt insbesondere die Verbrennung des Adsorptionsmittel in Betracht. Für die Verbrennung ist es daher von grossem Vorteil, dass das Adsorptionsmittel mit nichthalogenierten Kohlenwasserstoffen aufgeschäumt wird. Anderenfalls würden sich nämlich bei der Verbrennung mit grosser Wahrscheinlichkeit Schadstoffe wie Dioxine oder Furane bilden.

## Patentansprüche

1. Adsorbtionsmittel mit schaumartiger Struktur auf der Basis von aufgeschäumtem Mischpolymer von Styrol mit Olefinen mit 1 bis 8 Kohlenstoffatomen, vorzugsweise mit 2 bis 4 Kohlenstoffatomen, **dadurch gekennzeichnet, daß** das Adsorbtionsmittel eine Korn- oder Flockengröße von 1 bis 8 mm aufweist, wobei die Einstellung der Korn- oder Flockengröße durch mechanisches Zerreißen erfolgt ist.

2. Adsorbtionsmittel nach Anspruch 1, **dadurch gekennzeichnet daß** das Olefin Ethylen, Propylen, Butylen oder Isobutylen ist.

3. Adsorbtionsmittel nach einem der vorherigen Ansprüche, **dadurch gekennzeichnet daß** das Adsorbtionsmittel nach Einstellen der Korn- oder Flockengröße mit einer Lösung von Diolen oder Triolen behandelt ist.

4. Adsorbtionsmittel nach einem der vorhergehenden Ansprüchen, **dadurch gekennzeichnet, daß** die schaumartige Struktur durch Aufschäumen mit nicht halogenierten Kohlenwasserstoffen erzeugt ist.

5. Verfahren zum Reinigen von mit Kohlenwasserstoffen, insbesondere mit aliphatischen Kohlenwasserstoffen verunreinigten Böden oder anderen körnigen Feststoffen, unter Verwendung eines Adsorbtionsmittels nach den Patentansprüche 1 bis 4, mit folgenden Schritten:
- Zusammenführen des Bodens oder des Feststoffs mit einem Adsorbtionsmittel zu einem Gemisch,
- Intensives Durchmischen und Kontaktieren des Gemisches;
- Trennen des Gemisches in eine vorwiegend das mit der Verschmutzung beladene Adsorbtionsmittel enthaltende Phase und eine den gereinigten Boden oder Feststoff enthaltende Phase,
- Reinigen des beladenen Adsorbtionsmittels von der Verschmutzung.

6. Verfahren nach Anspruch 5, **dadurch gekennzeichnet, daß** vor dem Trennen des Gemisches dem Gemisch eine Flüssigkeit, insbesondere Wasser, zugegeben wird, daß die Reinigung des Adsorbtionsmittels in einer Presse oder Zentrifuge, insbesondere in einer zweistufigen Zentrifuge erfolgt und/oder daß das Adsorbtionsmittel nach der Reinigung in einem Kreisprozeß mit dem zu reinigenden Boden oder Feststoff zusammengeführt wird.

7. Verfahren nach einem der Ansprüchen 5 oder 6, **dadurch gekennzeichnet, daß** die Reinigung in wenigstens zwei Schritten erfolgt, wobei zunächst das Adsorbtionsmittel zusammen mit der Verschmutzung von der Flüssigkeit getrennt wird und dann die Verschmutzung von dem Adsorbtionsmittel abgetrennt wird, wobei das Trennen des Gemisches vorzugsweise in einem Sieb- oder Flotationsvorgang erfolgt.

8. Verfahren nach einem der Ansprüchen 5 bis 7, **dadurch gekennzeichnet, daß** dem Boden oder Feststoff vor oder unmittelbar nach dem Zusammenführen ein Lösungsmittel, insbesondere ein unpolares Lösungsmittel wie Benzin oder Naphtha zugesetzt wird.

## Claims

1. Adsorbent with a foam-type structure comprising a base of expanded foam copolymer of styrene with olefins having 1 to 8 carbon atoms, preferably having 2 to 4 carbon atoms, **characterised in that** the adsorbent has a grain or flock size of 1 to 8 mm and the grain or flock size is set by a mechanical crushing process.

2. Adsorbent as claimed in claim 1, **characterised in that** the olefin is ethylene, propylene, butylene or isobutylene.

3. Adsorbent as claimed in one of the preceding claims, **characterised in that** the adsorbent is treated with a solution of diols or triols after setting the grain or flock size.

4. Adsorbent as claimed in one of the preceding claims, **characterised in that** the foam-type structure is created by foaming with non-halogenated hydrocarbons.

5. Method of cleaning earth or other granular solids contaminated by hydrocarbons, in particular aliphatic hydrocarbons, using an adsorbent as claimed in claims 1 to 4, comprising the following steps:
- placing the earth or the solid in contact with an adsorbent in order to form a mixture,
- intensive mixing and contacting of the mixture,
- separating the mixture into a phase predominantly containing the adsorbent charged with the contaminants and a phase containing the cleaned earth or solid,
- removing the contaminants from the charged adsorbent.

6. Method as claimed in claim 5, **characterised in that**, prior to separating the mixture, a liquid, in particular water, is added to the mixture, the adsorbent is cleaned in a press or centrifuge, in particular a two-stage centrifuge, and/or the adsorbent is placed in contact with the earth or solid to be cleaned in a circulation process after cleaning.

7. Method as claimed in claim 5 or 6, **characterised in that** cleaning takes place in at least two steps, in which case the adsorbent together with the contaminants is firstly separated from the liquid and then the contaminants are separated from the adsorbent, which separation of the mixture preferably takes place in a screening or flotation process.

8. Method as claimed in one of claims 5 to 7, **characterised in that** a solvent, in particular a non-polar solvent such as benzene or naphtha, is added to the earth or solid before or immediately after placing them in contact.

## Revendications

1. Agent adsorbant à structure du type mousse, à base d'un polymère mixte, amené à l'état de mousse, de styrène avec des oléfines à 1 à 8 atomes de carbone, de préférence à 2 à 4 atomes de carbone, **caractérisé en ce que** l'agent adsorbant présente une grosseur de grains ou de flocons de 1 à 8 mm, le réglage de la grosseur des grains ou des flocons résultant d'un déchiquetage mécanique.

2. Agent adsorbant selon la revendication 1, **caractérisé en ce que** l'oléfine est l'éthylène, le propylène, le butylène ou l'isobutylène.

3. Agent adsorbant selon l'une ou l'autre des revendications 1 ou 2, **caractérisé en ce que** l'agent adsorbant est traité, après fixation de la grosseur des grains ou des flocons, par une solution de diols ou de triols.

4. Agent adsorbant selon l'une quelconque des revendications précédentes, **caractérisé en ce que** la structure du type mousse est obtenue par moussage avec des hydrocarbures non-halogénés.

5. Procédé pour la purification de sols ou d'autres substances solides granulées polluées par des hydrocarbures, en particulier des hydrocarbures aliphatiques, par utilisation d'un agent adsorbant selon les revendications 1 à 4, ce procédé comportant les étapes suivantes :
- création d'un mélange du sol ou de la substance solide avec un agent adsorbant ;
- mélangeage intense et mise en contact du mélange ;
- séparation du mélange en une phase contenant principalement l'agent adsorbant chargé des matières polluantes et une phase contenant le sol ou la substance solide purifiée ;
- purification de l'agent adsorbant chargé par élimination des polluants.

6. Procédé selon la revendication 1, **caractérisé en ce que** avant la séparation du mélange, est ajouté au mélange un liquide, en particulier de l'eau, la purification de l'agent adsorbant est réalisée dans une presse ou une centrifugeuse à deux étages, et/ou l'agent adsorbant, après la purification, est re-mélangé avec le sol ou la substance solide à purifier suivant un processus cyclique.

7. Procédé selon l'une ou l'autre des revendications 5 ou 6, **caractérisé en ce que** la purification est réalisée en deux étages, l'agent adsorbant étant d'abord séparé du liquide en même temps que le polluant, puis le polluant étant séparé de l'agent adsorbant, la séparation du mélange étant réalisée de préférence dans un processus de tamisage ou de flottation.

8. Procédé selon l'une quelconque des revendications 5 à 7, **caractérisé en ce que**, au sol, ou à la substance solide est ajouté, avant ou directement après le re-mélangeage, un agent dissolvant, en particulier un agent dissolvant non-polaire tel que le benzène ou le naphte.
